(19) Europäisches Patentamt
European Patent Office
Office européen des brevets

(11) EP 2 836 561 B1

(12) # FASCICULE DE BREVET EUROPEEN

(45) Date de publication et mention de la délivrance du brevet:
**24.06.2020 Bulletin 2020/26**

(21) Numéro de dépôt: **13719996.4**

(22) Date de dépôt: **11.04.2013**

(51) Int Cl.:
***C09D 179/08*** *(2006.01)* ***C09D 127/16*** *(2006.01)*
***C09D 127/18*** *(2006.01)* ***C08G 73/14*** *(2006.01)*
*B05D 7/14 (2006.01)* *B05D 7/00 (2006.01)*

(86) Numéro de dépôt international:
**PCT/FR2013/050793**

(87) Numéro de publication internationale:
**WO 2013/153337 (17.10.2013 Gazette 2013/42)**

(54) **COMPOSITIONS DE PRIMAIRES DE REVÊTEMENTS ANTIADHÉSIFS ET LEUR PROCÉDÉ DE PRÉPARATION**

GRUNDIERUNGSZUSAMMENSETZUNGEN FÜR ANTIHAFTBESCHICHTUNGEN UND VERFAHREN ZUR HERSTELLUNG DAVON

PRIMER COMPOSITIONS FOR NON-STICK COATINGS AND METHOD FOR MANUFACTURING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2012 FR 1253325**

(43) Date de publication de la demande:
**18.02.2015 Bulletin 2015/08**

(73) Titulaire: **SEB S.A.**
**69130 Ecully (FR)**

(72) Inventeurs:
- **GANTILLON, Barbara**
**F-74320 Leschaux (FR)**
- **PERILLON, Jean-Luc**
**F-26130 Saint Paul 3 Chateaux (FR)**
- **DUBANCHET, Aurélien**
**F-73100 Gresy sur Aix (FR)**

(74) Mandataire: **Rivière, Sophie**
**SEB Développement SAS**
**Campus SEB**
**112 Chemin du Moulin Carron**
**69134 Ecully Cedex (FR)**

(56) Documents cités:
**GB-A- 1 512 495** **US-A- 5 880 205**
**US-A1- 2008 118 741**

EP 2 836 561 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne de manière générale des compositions de primaire de revêtements antiadhésifs à base de résine fluorocarbonée. La présente invention concerne également un procédé de préparation de telles compositions, ainsi qu'un procédé de fabrication d'un article comportant un substrat métallique sur lequel on applique une telle composition.

Les compositions de primaire de revêtements antiadhésifs contiennent généralement à titre de résine d'accroché un polyamide-imide (PAI) en phase solvant. Or, il est classique d'utiliser à titre de solvant, dans des compositions à base de PAI, des solvants lourds de type aprotique polaire.

Par solvants de type aprotique polaire, on entend, au sens de la présente demande, des solvants qui possèdent un moment dipolaire non nul et sont dépourvus d'hydrogène susceptible de former une liaison hydrogène. A titre d'exemples de tels solvants de type aprotique polaire, on peut notamment citer la NEP (N-éthylpyrrolidone), la N-méthyl-2-pyrrolidone (NMP), le diméthylformamide (DMF), le N,N-diméthylacétamide (DMAC), le diméthylsulfoxyde (DMSO), etc...

En particulier, on utilise couramment, à titre de résine d'accroché dans des compositions de primaire de revêtements antiadhésifs pour articles culinaires, une résine polyamide-imide (PAI) en phase solvant à 30 % d'extrait sec dans la N-éthylpyrrolidone (NEP) ou la N-méthylpyrrolidone (NMP), qui sont des solvants générant des COV et considérés comme potentiellement toxiques et dangereux.

L'objectif principal de la présente invention est de fabriquer des compositions de primaire de revêtements antiadhésifs à base de résine fluorocarbonée et de PAI et contenant très peu, voire pas du tout, de solvant lourd de type aprotique polaire, et de préférence exemptes de solvant organique.

Pour résoudre ce problème technique, la demanderesse a mis au point un procédé de préparation d'une composition aqueuse de primaire, dans lequel on émulsifie en milieu aqueux un mélange de polyamide-acide amique et de base de Lewis. Cela permet de limiter fortement, voire même de supprimer, l'utilisation de tout solvant aprotique polaire et/ou de solvant organique pour solubiliser la résine d'accroché de type PAI tout en permettant de conserver des teneurs élevées en résine de PAI dans les formulations.

On obtient ainsi une composition de primaire aqueux dans lequel la résine d'accroché de type PAI est essentiellement émulsionnée dans de l'eau.

Plus particulièrement, la présente invention a donc pour objet une composition de primaire de revêtement antiadhésif comprenant une résine fluorocarbonée, un polyamide-acide amique ayant un indice d'acide compris entre 50 et 200 mg de KOH/g, une base de Lewis, de l'eau et moins de 1 % en poids d'un solvant aprotique polaire par rapport au poids total de ladite composition,
caractérisée en ce que le rapport massique entre la quantité de polyamide-acide amique dans ladite composition et la quantité de solvant aprotique polaire (ou rapport massique PAI/solvant aprotique polaire) dans ladite composition est d'au moins 1,5, de préférence compris entre 5 et 9, et mieux de l'ordre de 7.

Un rapport massique PAI/solvant aprotique polaire supérieur à 1,5 permet d'offrir une bonne sécurité à l'application car le primaire et les semi-finis restent exempts de l'obligation d'étiquetage.

Par étiquetage, on entend, au sens de la présente demande, les conditions pour lesquelles les solvants et les mélanges de solvants sont soumis à l'obligation d'étiquetage. Ces conditions sont définies par les textes suivants : RÈGLEMENT (CE) No 1272/2008 DU PARLEMENT EUROPÉEN ET DU CONSEIL du 16 décembre 2008 et ses adaptations aux progrès technologiques, par exemple la DIRECTIVE de la Commission européenne 2009/2/EC du 15 janvier 2009.

Pour des raisons de santé humaine, il est préférable de maintenir par exemple certains solvants qui sont toxiques pour la reproduction en dessous de certaines limites (dans le cas présent moins de 1 % de solvant aprotique polaire dans la composition). Lorsque ces limites sont respectées, le règlement et ses modifications permettent de considérer que le solvant incriminé ne pose pas de réels problèmes de santé humaine et qu'en conséquence sa classification ne s'impose pas au mélange, ce qui autorise une mise en oeuvre avec des prescriptions de sécurité allégées et une absence d'étiquetage du mélange. On considérera donc qu'une absence ou exemption d'étiquetage signifie que la teneur est suffisamment basse pour que la classification très pénalisante du solvant incriminé ne soit pas étendue à l'ensemble du mélange.

La composition de primaire selon l'invention ne nécessite pas d'étiquetage.

Un rapport massique PAI/solvant aprotique polaire élevé (proche de 7) permet d'offrir une sécurité maximale à l'application.

On utilisera plutôt des primaires dont le rapport massique PAI/solvant aprotique polaire est à peine supérieur à 1,5 si les conditions industrielles nécessitent de favoriser le séchage en facilitant l'évaporation de l'eau.

Des valeurs supérieures à 9 sont possibles et même souhaitables car elles offrent une sécurité maximale ; toutefois, en l'état actuel de la technique, elles restent peu économiques car elles obligent à une purification coûteuse (c.à.d. élimination du solvant de synthèse) de la résine.

Un rapport massique PAI/solvant aprotique polaire d'au moins 1,5 peut aussi être obtenu en augmentant la

part de solvant non aprotique polaire, mais cela se fait au détriment d'une légère perte d'extrait sec et d'une relative augmentation de la teneur en composés organiques volatiles.

Dans tous les cas, les compositions de primaire selon l'invention, qui ne nécessitent pas d'être étiquetées, conservent des extraits secs élevés, ce qui permet de réduire le nombre de couches pour une épaisseur donnée.

La composition de primaire selon l'invention comprend moins de 1 % en poids, et mieux moins de 0,3 % en poids, de solvant aprotique polaire par rapport au poids total de ladite composition.

Une telle composition de primaire présente une bien meilleure stabilité dans le temps, avec des propriétés de viscosité qui n'évoluent pas dans le temps, que ce soit à température ambiante ou même à 40°C. En outre, de telles compositions sont non odorantes (par rapport à des compositions de primaire à base de solvants) et sont caractérisées par des taux en COV (composés organo-volatiles) faibles de l'ordre de 1 % à 12 % en poids et de préférence très faibles de l'ordre de 1 à 5 %, contre plus de 15 % pour des formules en solvant.

Après enduction sur un substrat, notamment métallique, puis cuisson à une température de l'ordre de 420°C, on obtient une couche de primaire présentant d'excellentes performances d'adhérence sur le support.

Enfin, un revêtement antiadhésif, comprenant une composition de primaire selon l'invention, elle-même recouverte classiquement par une ou plusieurs couches de finition à base de résine fluorocarbonée, présente des propriétés de résistance à la corrosion et de résistance à l'abrasion qui sont équivalentes à celles d'un revêtement antiadhésif dont la ou les couche(s) de primaire ont été obtenues à partir de PAI dissoute dans un solvant aprotique polaire seul ou dans un mélange en contenant au moins 33 %.

A titre de solvants aprotiques polaires utilisables (en faible quantité) dans le cadre de la présente invention, on peut notamment citer les solvants choisis dans le groupe comprenant la NEP (N-éthylpyrrolidone), la N-méthyl-2-pyrrolidone (NMP), le diméthylformamide (DMF), le N,N-diméthylacétamide (DMAC), le diméthylsulfoxyde (DMSO), etc...

De manière avantageuse, la composition de primaire selon l'invention peut comprendre en outre moins de 45 %, de préférence moins de 20 %, et mieux moins de 10 %, en poids d'un solvant organique non aprotique polaire par rapport au poids total de la composition.

A titre de solvants organiques non aprotiques polaires utilisables dans le cadre de la présente invention, on peut notamment citer le propylène glycol, l'acétate de propylène glycol, les alcools, les aromatiques comme le xylène, etc...

A titre de bases de Lewis utilisables dans une composition de primaire selon l'invention, on peut notamment citer les amines aliphatiques secondaires hydroxylées ou non, les amines primaires hydroxylées, les imidazoles, les imidazolines et les amines secondaires hétérocycliques.

Dans le cadre de la présente invention, on utilise de préférence, à titre de base de Lewis, la 2-butylaminoéthanol, l'isopropylaminoéthanol et ramino-2-éthyl-1,3-propanediol.

De manière avantageuse, le polyamide-acide amique peut comprendre des unités amide-acide amique répondant à la formule structurelle [1] dans laquelle R représente un radical arylène divalent :

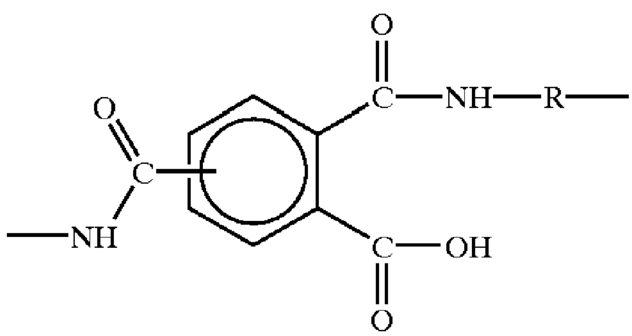

[1]

et des unités amide-imide répondant à la formule structurelle [2] :

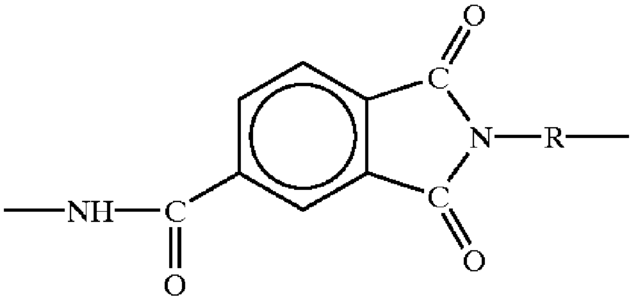

[2]

le rapport molaire desdites unités amide-acide amique sur les dites unités amide-imide est compris entre 18 : 1 et 5 : 1.

La résine fluorocarbonée de la composition de primaire selon l'invention peut être avantageusement choisie dans le groupe comprenant les polytétrafluoroéthylènes (PTFE), les copolymères de tétrafluoroéthylène et de perfluoropropylvinyléther (PFA), les copolymères de tétrafluoroéthylène et d'hexafluoropropène (FEP), les polyfluorures de vinylidène (PVDF), le MVA (copolymère de TFE/PMVE), les terpolymères TFE/PMVE/FAVE, l'ETFE, et leurs mélanges.

On utilisera de préférence à titre de résine fluorocarbonée le polytétrafluoroéthylène (PTFE), ou un mélange (PTFE/PFA) de polytétrafluoroéthylène (PTFE) et de copolymère de tétrafluoroéthylène et de perfluoropropylvinyléther (PFA), ou un mélange (PTFE/FEP) de polytétrafluoroéthylène (PTFE) et de copolymère de tétrafluoroéthylène et d'hexafluoropropène (FEP).

De manière avantageuse, la résine fluorocarbonée peut représenter 20 % à 98 %, et de préférence 50 % à 80 %, en poids du poids total sec de la composition de primaire.

De manière avantageuse, la composition de primaire selon l'invention peut en outre comprendre au moins une charge, qui peut représenter moins de 40 % en poids, et de préférence de 5 % à 20 % en poids, du poids total sec de la composition de primaire.

Dans le cadre de la présente invention, on utilisera de préférence à titre de charge des nanoparticules de silice ou d'alumine.

La présente invention a également pour objet un procédé de préparation d'une composition de primaire, qui comprend les étapes suivantes :

- la préparation d'un mélange aqueux contenant :
    - un polyamide-acide amique ayant un indice d'acide compris entre 50 et 200 mg de KOH/g,
    - une base de Lewis, présente dans ledit mélange aqueux en une quantité représentant entre 95 % et 250 % de la quantité stœchiométrique nécessaire pour neutraliser les groupements acides dudit polyamide-acide amique,
    - de l'eau, et
    - moins de 1 % en poids de solvant aprotique polaire par rapport au poids total de ladite composition ;
- la mise en émulsion dudit mélange aqueux par chauffage à pression atmosphérique et à une température d'au moins 40°C, et de préférence à une température comprise entre 50 et 85°C ;
- puis le mélange de ladite émulsion avec une résine fluorocarbonée en poudre ou en dispersion aqueuse ;

le procédé étant caractérisé en ce que le polyamide-acide amique est présent en une quantité telle que le rapport massique entre la quantité de polyamide-acide amique dans ladite composition et la quantité de solvant aprotique polaire dans ladite composition est d'au moins 1,5, et de préférence compris entre 5 et 9, et mieux de l'ordre de 7.

De préférence, la composition de primaire comprend moins de 1 % en poids, et de préférence moins de 0,3 % en poids, de solvant aprotique polaire par rapport au poids total de la composition.

Une teneur très faible en solvant aprotique polaire dans la composition permet non seulement de limiter très considérablement le dégagement de composés organiques volatiles (COV), mais aussi d'obtenir une formulation particulièrement saine et sure. En effet, à des teneurs inférieures à 5 %, voire même inférieures à 0,3 %, la formulation n'est plus considérée comme reprotoxique ou même irritante. Il s'ensuit que la manipulation de la formulation est facilitée car les précautions à prendre sont simplifiées.

La base de Lewis, le polyamide-acide amique, et le solvant aprotique polaire sont tels que définis précédemment.

Le solvant organique non aprotique polaire est également tel que défini plus haut. Bien qu'il participe à l'émission

de composés organiques volatiles, il peut s'avérer nécessaire dans la composition pour régulariser l'évaporation des substances volatiles et faciliter la formation d'un film étanche.

De manière avantageuse, la composition de primaire selon l'invention peut comprendre moins de 45 %, de préférence moins de 20 %, et mieux moins de 10 %, en poids d'un solvant organique non aprotique polaire par rapport au poids total de la composition.

La composition de primaire préparée selon le procédé selon l'invention est une émulsion dans laquelle la phase dispersante est l'eau et la phase dispersée se présente avantageusement sous forme de gouttelettes dont le diamètre moyen est égal ou inférieur à 5 $\mu$m, de préférence compris entre 20 et 500 nm, et mieux compris entre 20 et 300 nm.

La présente invention a encore pour objet un procédé de fabrication d'un article comprenant les étapes suivantes :

- la fourniture d'un substrat métallique présentant deux faces opposées ;
- l'application sur l'une des faces dudit substrat d'au moins une couche de composition de primaire telle que définie précédemment ;
- l'application sur ladite couche de composition de primaire d'au moins une couche de composition de finition comprenant au moins une résine fluorocarbonée ; puis
- cuisson de l'ensemble à une température comprise entre 370°C et 430°C.

Enfin, la présente invention a encore pour objet un article susceptible d'être obtenu selon le procédé de fabrication d'un article selon l'invention.

On peut envisager différents types d'articles conformes à l'invention, de différentes formes et réalisés dans différents matériaux.

Ainsi, il peut s'agir d'un article comportant un support en un matériau choisi parmi les métaux, le verre, les céramiques et les matières plastiques.

A titre de supports métalliques utilisables dans le procédé selon l'invention, on peut avantageusement citer les supports en aluminium ou en alliage d'aluminium anodisé ou non, ou en aluminium poli, brossé ou microbillé, sablé, traité chimiquement ou en acier inoxydable poli, brossé ou microbillé, ou en fonte de fer ou d'aluminium, en titane ou en cuivre martelé ou poli.

L'article selon l'invention peut notamment être un article culinaire, et en particulier peut comprendre un support dont l'une des faces constitue une face interne destinée à être en contact avec des aliments placés à l'intérieur dudit article et l'autre face est une face externe convexe destinée à être en contact avec une source de chaleur.

A titre d'exemples non limitatifs d'articles culinaires conformes à la présente invention, on citera notamment des articles culinaires tels que les casseroles et les poêles, les woks et les sauteuses, les faits-touts et les marmites, les autocuiseurs, les crêpières, les grills, les moules et plaques pour la pâtisserie, les coupelles à raclette, les plaques et grilles de barbecue, les bols de préparation, les cuves de friteuses et de cuiseurs à riz.

On peut également envisager d'autres types de supports qui ne sont pas limités au seul domaine culinaire. Ainsi, on peut également envisager à titre d'articles conformes à l'invention des articles électroménagers tels que des fers à repasser, des fers à friser, des lisseurs à cheveux etc., des pots isothermes (pour cafetières par exemple) ou des bols mixeurs.

L'invention est illustrée plus en détail dans les exemples suivants.

Dans ces exemples, sauf indication contraire, tous les pourcentages et parties sont exprimés en pourcentages massiques.

## EXEMPLES

### Produits

Supports

- supports en aluminium sablés sur leurs deux faces principales (présentant une rugosité moyenne arithmétique Ra mesurée comprise entre 4 et 6 $\mu$m) ;
- supports en aluminium lisses simplement dégraissés.

Mélanges aqueux de semi-fini

- Aminés :

  ◦ 2-aminoéthanol, commercialisée par la société TAMINCO sous la marque Advantex®
  Caractéristiques :

    RN-CAS : 111-75-1 ;
    Poids moléculaire Mw : 117,2g/mol ;
    Téb. = 199°C (température d'ébullition) ;
    point éclair = 96°C, pKa = 10, densité : 0,891 ;
    très faible odeur.

  ◦ Isopropylaminoéthanol (IPAE), commercialisé par la société ARKEMA sous la marque Alpamine® N41
  Caractéristiques :

    RN-CAS de l'amine : 35265-04-4 ;
    Téb. = 186°C (température d'ébullition) ;
    point éclair = 85°C, pKa = 9,9.

  ◦ Amino-2-éthyl-1,3-propanediol (AEPD), commercialisé par la société Angus-DOW CHEMICAL sous la marque AEPD™VOX1000
  Caractéristiques :

    RN-CAS de l'amine : 115-70-8 ;
    Poids moléculaire Mw : 119 g/mol ;
    Téb. = 259°C (température d'ébullition) ;
    point éclair = 119°C, pKa = 8,8.

  ◦ Triéthylamine

    RN-CAS : 121-44-8 ;
    Téb. = 89°C, pKa = 10,8 ;
    très forte odeur d'amine.

- Polyamide-acide amique sous forme pulvérulente à 35 % d'extrait sec et moins de 5 % en poids de NMP ;
- Résine polyamide-imide (PAI) à 29 % d'extrait sec dans la NEP (n-éthylpyrrolidone).

Compositions de primaire aqueux

- Charge : silice colloïdale non modifiée en surface avec une surface spécifique de 220 $m^2$/g environ et qui se présente sous forme de dispersion aqueuse avec un extrait sec de 30 % ;
- Dispersion de noir de carbone à 25 % d'extrait sec ;
- Dispersion de PTFE à 60 % d'extrait sec ;
- Système tensioactif non-ionique à base d'alkylphénol éthoxylé à 13 % d'extrait sec ;
- Propylène glycol (solvant organique).

**Tests**

Détermination de l'extrait sec d'un mélange aqueux de semi-fini

**PRINCIPE**

L'extrait sec d'un produit est la partie solide résiduelle restant après évaporation des matières volatiles qu'il contient. La température et la durée de séchage jouent un grand rôle, car les solvants à point d'ébullition élevé, les fractions de monomères, les diluants réactifs et les sous-produits de réaction (selon leur degré de rétention) quittent très lentement le film en formation. Il est donc très important de définir de façon très conventionnelle des conditions de séchage normalisées, aussi proches que possible de la pratique.

**MODE OPERATOIRE**

Pour mesurer cet extrait sec, on procède de la manière suivante :

- on pèse une coupelle en aluminium : $m_0$ = masse de la coupelle ;
- on dispose entre 0,5 g et 3 g de produit à étudier ;
- on pèse la coupelle remplie : $m_1$ = masse de la coupelle remplie ;
- $m_1$-$m_0$ = masse de l'échantillon avant étuvage ;
- on place la coupelle dans une étuve à 210°C pendant deux heures ;
- après étuvage et après refroidissement, on pèse la coupelle : masse $m_2$ ;
- $m_2$-$m_0$ = masse de l'échantillon après étuvage ;
- l'extrait sec est donné par la formule (1) ci-dessous :

$$\text{Extrait sec} = 100x(m_2-m_0)/(m_1-m_0) \qquad (1)$$

Evaluation de la stabilité de la viscosité d'un mélange aqueux de semi-fini ou d'une composition de primaire en phase aqueuse

Il s'agit d'évaluer la stabilité de la viscosité d'une composition de mélange aqueux de semi-fini (sans PTFE) ou de primaire (avec PTFE et charges) appliquée par pulvérisation en mesurant les temps d'écoulement selon la norme DIN EN ISO 2433/ASTM D5125 au moyen d'une coupe 2,5 ou d'une coupe 4 :

- la viscosité correspond au temps d'écoulement continu exprimé en secondes du volume de la coupe à travers l'orifice calibré. Le choix de la coupe est fait en fonction de la viscosité supposée du produit ;
- suivi de l'évolution de la viscosité par la mesure du temps d'écoulement continu du volume normalisé et à température ambiante tout de suite après la préparation des compositions, et suivi de l'évolution de cette viscosité dans le temps à température ambiante ;
- mise en étuve à 40°C des compositions une fois formulées ; puis suivi dans le temps de l'évolution du temps d'écoulement et donc de la viscosité (évaluation de la stabilité de l'émulsion après vieillissement à 40°C).

Mesure de la taille et de la distribution de tailles des particules par diffraction de la lumière

On détermine les tailles de particules contenues dans le mélange aqueux de semi-fini sans PTFE par diffraction de la lumière à l'aide d'un granulomètre laser de type Beckman Coulter LS230, équipé d'un module de couplage de fluide à vitesse variable (« *Variable Speed Fluid Module* »). Le principe de la mesure est le suivant :

- l'échantillon est dilué dans un grand volume d'eau ;
- on réalise 6 mesures pour obtenir une valeur moyenne de la taille de particule ;
- le granulomètre mesure une répartition de taille de particules en volume et en nombre ; on retient la moyenne en nombre.

Evaluation de la résistance à l'abrasion d'un revêtement antiadhésif

On évalue la résistance à l'abrasion d'un revêtement antiadhésif sur un substrat en aluminium sablé. Pour cela, on procède comme suit :

- on applique sur le substrat une composition de primaire d'accrochage (telle que définie dans les exemples 6 à 13) pour former une couche humide de primaire d'accrochage, puis
- on applique, sur cette couche de primaire, une composition de finition F dont la composition est donnée ci-après pour 100 g de composition (identique pour chaque test réalisé avec chacune des compositions de primaire des exemples 6 à 13) :

Composition de finition F

| | |
|---|---|
| Dispersion PTFE (60 % extrait sec) : | 80,6 g |
| Dispersion PFA (50 % extrait sec) : | 0,5 g |
| Noir de fumée (25 % extrait sec) : | 0,02 g |
| Agents d'étalement (tensio-actifs) : | 2,23 g |
| Eau : | 8,02 g |
| Xylène : | 6,50 g |
| Copolymère acrylique >95 % : | 0,6 g |
| Triéthanolamine : | 0,22 g |
| Paillettes décor métallisées : | 0,2 g |
| Propylène Glycol : | 1,11 g |
| Total : | 100,00 g |

Ce test réalisé selon la norme AFNOR NF D21-511 $ 3.3.7 consiste :

- d'une part à évaluer la résistance à la rayure du revêtement antiadhésif (comprenant une couche de primaire et une couche de finition) en le soumettant à l'action d'un tampon abrasif de type SCOTCH BRITE (marque déposée) vert, la résistance à la rayure étant estimée quantitativement par le nombre de passages au tampon nécessaires pour créer la première rayure (correspondant à l'apparition du métal constitutif du support) ; et
- d'autre part à évaluer la perte de l'anti-adhérence du revêtement tout le long du test, celle-ci étant estimée quantitativement par le nombre de cycles réalisés jusqu'à perte de l'anti-adhérence du revêtement (test au lait carbonisé - selon la norme NF D 21-511) : celle-ci est mesurée en fonction du nettoyage plus ou moins facile du lait carbonisé. La cotation est la suivante :

  - <u>100</u> : signifie que la pellicule de lait carbonisé est éliminée complètement par simple application d'un jet d'eau du robinet de cuisine ;
  - <u>50</u> : signifie qu'il faut ajouter des mouvements circulaires de l'objet sous le jet d'eau pour décoller complètement la pellicule carbonisée ;
  - <u>25</u> : signifie qu'il faut laisser tremper pendant 10 minutes et éventuellement forcer le départ en passant une éponge humide pour éliminer complètement la pellicule ;
  - <u>0</u> : signifie qu'à l'issue du processus précédent, tout ou partie de la pellicule carbonisée reste adhérente.

<u>Evaluation de l'adhérence d'une couche de primaire sur un substrat en aluminium lisse</u>

On effectue un test par quadrillage selon la norme ISO 2409, suivi d'une immersion de l'article pendant 18 heures (consistant en une alternance de 3 cycles de trois heures dans de l'eau bouillante et de 3 cycles de 3 heures dans l'huile à 200°C). Puis, on observe si le revêtement antiadhésif présente ou non un décollement.
La cotation est la suivante :

- aucun carré ne doit être décollé pour obtenir une cotation de 100 (adhérence excellente) ;
- en cas de décollement la valeur relevée est égale à 100 diminuée du nombre de carrés décollés.

<u>Evaluation de la résistance à la corrosion d'un revêtement antiadhésif sur un substrat en aluminium lisse</u>

On évalue la résistance à la corrosion d'un revêtement antiadhésif sur un substrat en aluminium lisse, en évaluant sa résistance à la diffusion du sel vers le substrat métallique qui corrode.
Pour cela on procède comme suit :

- on applique sur le substrat une composition de primaire d'accrochage (telle que définie dans les exemples 6 à 13) pour former une couche humide de primaire d'accrochage ; puis
- on applique, sur cette couche de primaire, la composition de finition F (identique pour chaque test réalisé avec chacune des compositions de primaire des exemples 6 à 13) ;
- on réalise une immersion, pendant 20 heures, du substrat ainsi revêtu dans une solution aqueuse saline portée à ébullition. Cette solution saline comporte 10 % en poids de chlorure de sodium. Le protocole de ce test est celui défini dans la norme AFNOR NF D21-511 $ 3.3.5. ;
- à l'issue de chaque immersion, on réalise un contrôle visuel de l'aspect final du revêtement, qui consiste à noter la

présence ou l'absence de traces de corrosion (par une observation visuelle à l'œil nu ou à la loupe binoculaire). Il s'agit en pratique de déceler la présence éventuelle de traces telles que des cloques avec étendue des zones, des traces blanches sous le revêtement ;

- cette observation est suivie d'un test par quadrillage selon la norme ISO 2409.

## EXEMPLE 1

**Préparation d'un mélange aqueux de semi-fini SF1 à base de 2-butylaminoéthanol (avec un taux de solvant aprotique polaire inférieur à 1 % en poids)**

On réalise un mélange aqueux de semi-fini SF1 comportant les composés suivants, leurs quantités respectives étant indiquées en g :

| | | |
|---|---|---|
| - | 2-butylaminoéthanol | : 26 g |
| - | polyamide-acide amique (à 35 % d'extrait sec et moins de 5 % de NMP) | : 149 g |
| - | eau déminéralisée | : 580 g |
| | TOTAL | : 755 g |

Dans le mélange SF1, le rapport pondéral eau/amine est d'environ 94/6, de sorte que l'amine est en large excès par rapport aux groupements carboxyliques terminaux de l'acide polyamide-amique. Le pourcentage pondéral d'amine dans le mélange est de 5 %. Le taux de solvant aprotique polaire dans le mélange SF1 est inférieur à 1 % en poids par rapport au poids total du mélange.

Pour réaliser le mélange aqueux de semi-fini SF1, on procède comme suit :

- on introduit dans un réacteur l'eau et l'amine ;
- le mélange obtenu est mis sous agitation, puis chauffé à une température de 65°C +/- 5°C ;
- puis, on introduit, sous agitation, dans le mélange la poudre de polyamide-acide amique ;
- le mélange ainsi obtenu est maintenu sous agitation à 65°C pendant au minimum 2h30 et jusqu'à 5h au maximum.

Les propriétés du mélange aqueux ainsi obtenu SF1 sont les suivantes :

- extrait sec théorique : 6,9 %,
- extrait sec mesuré dans la solution : 8 %,
- il s'agit d'une émulsion très fluide et de couleur blanche opalescente,
- viscosité (en coupe 2,5 selon la norme DIN EN ISO 2433/ASTM D5125): 50 sec,
- après mise en vieillissement à 40°C, l'émulsion SF1 est toujours stable après 60 jours de stockage, évolution de la viscosité inférieure à 20 %.

La détermination de la taille des particules par diffraction de la lumière à l'aide d'un granulomètre laser montre que l'on obtient un pic principal centré sur un diamètre moyen de 135 nm et qu'il n'y a pas de grosses particules supérieures à 4 $\mu$m. L'absence de particules supérieures à 4 $\mu$m confirme la mise en émulsion de la totalité de la poudre.

## EXEMPLE 2

**Préparation d'un mélange aqueux de semi-fini SF2 à base d'isopropylaminoéthanol (avec un taux de solvant aprotique polaire inférieur à 1 % en poids)**

On réalise un mélange aqueux de semi-fini SF2 comportant les composés suivants, leurs quantités respectives étant indiquées en g :

| | | |
|---|---|---|
| - | isopropylaminoéthanol (IPAE) | : 26 g |
| - | polyamide-acide amique (à 35 % d'extrait sec et moins de 5 % de NMP) | : 149 g |
| - | eau déminéralisée | : 355 g |
| | TOTAL | : 530 g |

Dans le mélange SF2, le rapport pondéral eau/amine est d'environ 94/6, de sorte que l'amine est en large excès par rapport aux groupements carboxyliques terminaux de l'acide polyamide-amique. Le pourcentage pondéral d'amine dans le mélange est de 5 %. Le rapport pondéral polyamide-acide amique/amine est de 67/33. Le taux de solvant aprotique polaire dans le mélange SF2 est inférieur à 1 % en poids par rapport au poids total du mélange.
Pour réaliser le mélange aqueux de semi-fini SF2, on procède de la même manière qu'à l'exemple 1.
Les propriétés du mélange aqueux ainsi obtenu SF2 sont les suivantes :

- extrait sec théorique : 9,8 %,
- extrait sec mesuré dans la solution : 11 %,
- il s'agit d'une émulsion très fluide et de couleur blanche opalescente,
- viscosité (en coupe 2,5 selon la norme DIN EN ISO 2433/ASTM D5125): 70 sec,
- après mise en vieillissement à 40°C, l'émulsion SF2 est stable après 50 jours de stockage, évolution de la viscosité inférieure à 20 %.

## EXEMPLE 3

### Préparation d'un mélange aqueux de semi-fini SF3 à base d'amino-2-éthyl-1,3-propanediol (avec un taux de solvant aprotique polaire inférieur à 1 % en poids)

On réalise un mélange aqueux de semi-fini SF3 comportant les composés suivants, leurs quantités respectives étant indiquées en g :

| | | |
|---|---|---|
| - | polyamide-acide amique (à 35 % d'extrait sec et moins de 5 % de NMP) | : 149 g |
| - | amino-2-éthyl-1,3-propanediol | : 26 g |
| - | eau déminéralisée | : 265 g |
| | TOTAL | : 440 g |

Dans le mélange SF3, le rapport pondéral eau/amine est d'environ 94/6, de sorte que l'amine est en large excès par rapport aux groupements carboxyliques terminaux de l'acide polyamide-amique. Le pourcentage pondéral d'amine dans le mélange est de 5 %. Le rapport pondéral polyamide-acide amique/amine est de 68/32. Le taux de solvant aprotique polaire dans le mélange SF3 est inférieur à 1 % en poids par rapport au poids total du mélange.
Pour réaliser le mélange aqueux de semi-fini SF3, on procède de la même manière qu'à l'exemple 1.
Les propriétés du mélange aqueux ainsi obtenu SF3 sont les suivantes :

- extrait sec théorique : 12 %,
- extrait sec mesuré dans la solution : 13 %,
- il s'agit d'une émulsion très fluide et de couleur blanche opalescente,
- viscosité (en coupe 2,5 selon la norme DIN EN ISO 2433/ASTM D5125): 250 sec,
- après mise en vieillissement à 40°C, l'émulsion SF3 est toujours stable après 60 jours de stockage, évolution de la viscosité inférieure à 20 %.

## EXEMPLE COMPARATIF 4

### Préparation d'un mélange aqueux de semi-fini SFC4 à base de résine polyamide-imide PAI avec une teneur en poids de solvant aprotique polaire de l'ordre de 71 %

On réalise un mélange aqueux de semi-fini SFC4 comportant les composés suivants, leurs quantités respectives étant indiquées en g pour 1000 g de composition :

| | | |
|---|---|---|
| - | résine PAI à 29 % d'extrait sec dans NEP | : 327,9 g |
| - | solvant aprotique polaire N-éthylpyrrolidone | : 117,7 g |
| - | triéthylamine | : 32,8 g |
| - | eau déminéralisée | : 521,6 g |
| | TOTAL | : 1000 g |

La mise en solution de la PAI comporte une étape de broyage de la PAI, le broyage des composés susmentionnés étant réalisé dans un broyeur à billes de marque Discontimill®, à température ambiante pendant une durée pouvant varier entre 2 et 5 heures.

Dans le mélange SFC4, le rapport pondéral eau/amine est d'environ 94/6. Le pourcentage pondéral d'amine dans le mélange est de 3,3 %. Le rapport pondéral polyamide-acide amique/amine est de 74/26. Le taux de solvant aprotique polaire dans le mélange SFC4 est de 35 % en poids par rapport au poids total du mélange.

Les propriétés du mélange aqueux ainsi obtenu SFC4 sont les suivantes :

- extrait sec théorique : 9,5 %,
- extrait sec mesuré dans la solution : 9,3 %,
- il s'agit d'une solution de couleur jaune translucide et très visqueuse,
- viscosité (en coupe 4 selon la norme DIN EN ISO 2433/ASTM D5125): 130 sec,
- après mise en vieillissement à 40°C, l'émulsion SFC4 est n'est plus stable après 10 jours de stockage : elle a décanté et la partie inférieure s'est fortement épaissie.

## EXEMPLE 5

**Préparation d'un mélange aqueux de semi-fini SF5 à base de triéthylamine (avec un taux de solvant aprotique polaire inférieur à 5 % en poids)**

On réalise un mélange aqueux de semi-fini SF5 comportant les composés suivants, leurs quantités respectives étant indiquées en g :

| | |
|---|---|
| - polyamide-acide amique (à 35 % d'extrait sec et moins de 5 % de NMP) | : 103 g |
| - triéthylamine | : 21,4 g |
| - eau déminéralisée | : 485 g |
| TOTAL | : 609,4 g |

Pour réaliser le mélange aqueux semi-fini SF5, on procède comme suit :

- on introduit dans un réacteur un mélange d'eau et de triéthylamine ;
- le mélange obtenu est mis sous agitation, puis chauffé à une température de 65°C +/- 5°C ;
- puis, on introduit, sous agitation, dans le mélange la poudre de polyamide-acide amique ;
- le mélange ainsi obtenu est maintenu sous agitation à 65°C pendant au minimum 5 heures et jusqu'à 10 heures au maximum.

Les propriétés du mélange aqueux ainsi obtenu SF5 sont les suivantes :

- extrait sec théorique : 6 %,
- extrait sec mesuré dans la solution : 6,3 %,
- il s'agit d'un produit translucide de couleur miel, visqueux,
- viscosité (en coupe 4 selon la norme DIN EN ISO 2433/ASTM D5125): 50 sec,
- après mise en vieillissement à 40°C, le produit forme un gel après seulement 10 jours de stockage (pas d'écoulement, viscosité non mesurable).

## EXEMPLE 6

**Préparation d'une composition de primaire P1 en phase aqueuse à partir du semi-fini SF1 de l'exemple 1**

On réalise une composition de primaire P1 d'accrochage comportant les composés suivants, leurs quantités respectives étant indiquées en g pour 100 g de composition :

| | |
|---|---|
| - dispersion de PTFE (60 % extrait sec) | : 34,36 g |
| - dispersion Noir de carbone (25 % extrait sec) | : 3,95 g |
| - semi-fini SF1 (6,9 % extrait sec) | : 41,89 g |
| - système tensioactif non-ionique à base d'alkylphénol éthoxylé (13 %) | : 5,81 g |

(suite)

| | | |
|---|---|---|
| - | silice colloïdale (30 % extrait sec) | : 12,37 g |
| - | eau déminéralisée | : 1,62 g |
| | TOTAL | : 100 g |

Le taux d'amine dans le primaire est inférieur à 2 %. Le taux de solvant aprotique polaire dans la composition de primaire est inférieur à 0,3 %. Le taux de solvant organique est inférieur à 5 %. Le taux d'eau dans la formulation du primaire est compris entre 65 % et 68 %.

Le taux de résine PAI dans la composition totale est de 2,89 %.

Le taux de solvant aprotique polaire (NMP) dans la composition totale est de 0,41 %.

Le rapport massique entre la quantité de polyamide-acide amique dans la composition de primaire P1 et la quantité de solvant aprotique polaire (NMP) dans la composition de primaire P1 (ratio PAI/SAP, SAP désignant un solvant aprotique polaire) est de 7,05.

Pour réaliser la composition de primaire P1, on introduit dans le semi-fini aqueux SF1 tous les autres composés susmentionnés.

Les propriétés de la composition de primaire P1 ainsi obtenue sont les suivantes :

- extrait sec mesuré du primaire : 29,5 %,
- viscosité (en coupe 2,5 selon la norme DIN EN ISO 2433/ASTM D5125): 50 sec,
- la teneur en composés organiques volatiles est de 1,86 %.

## EXEMPLE 7

### Préparation d'une composition de primaire P2 en phase aqueuse à partir du semi-fini SF2 de l'exemple 2

On réalise une composition de primaire P2 d'accrochage comportant les composés suivants, leurs quantités respectives étant indiquées en g pour 100 g de composition :

| | | |
|---|---|---|
| - | dispersion PTFE (60 % extrait sec) | : 31,52 g |
| - | dispersion Noir de carbone (25 % extrait sec) | : 3,62 g |
| - | semi-fini SF2 (9,8 % extrait sec) | : 38,43 g |
| - | système tensioactif non-ionique à base d'alkylphénol éthoxylé (13 %) | : 5,33 g |
| - | silice colloïdale (30 % extrait sec) | : 11,35 g |
| - | propylène glycol | : 8,26 g |
| - | eau déminéralisée | : 1,49 g |
| | TOTAL | : 100 g |

Le taux d'amine dans le primaire est inférieur à 2 %. Le taux de solvant aprotique polaire dans la composition est inférieur à 0,3 %. Le taux de solvant organique est compris entre 8 % et 10 %. Le taux d'eau dans la formulation du primaire est compris entre 60 % et 63 %.

Le taux de résine PAI dans la composition totale est de 3,78 %.

Le taux de solvant aprotique polaire (NMP) dans la composition totale est de 0,54 %.

Le rapport massique entre la quantité de polyamide-acide amique dans la composition de primaire P2 et la quantité de solvant aprotique polaire (NMP) dans la composition de primaire P2 (ratio PAI/SAP) est de 7.

Pour réaliser la composition de primaire P2, on introduit dans le semi-fini aqueux SF2 tous les autres composés susmentionnés.

Les propriétés de la composition de primaire P1 ainsi obtenue sont les suivantes :

- extrait sec mesuré du primaire : 26,5 %,
- viscosité (en coupe 2,5 selon la norme DIN EN ISO 2433/ASTM D5125): 49 sec,
- la teneur en composés organiques volatiles est de 11,38 %,
- la présence d'une forte quantité de solvant non aprotique polaire (propylène glycol) favorise le séchage du primaire en conditions industrielles.

## EXEMPLE COMPARATIF 8

**Préparation d'une composition de primaire PC3 en phase aqueuse à partir du semi-fini SFC4 de l'exemple 4**

On réalise une composition de primaire PC3 d'accrochage comportant les composés suivants, leurs quantités respectives étant indiquées en g pour 1000 g de composition :

| | | |
|---|---|---|
| - | dispersion PTFE (60 % extrait sec) | : 318 g |
| - | dispersion Noir de carbone (25 % extrait sec) | : 41 g |
| - | semi-fini SFC4 (9,5 % extrait sec) | : 434 g |
| - | système tensioactif non-ionique à base d'alkylphénol éthoxylé (13 %) | : 21 g |
| - | silice colloïdale (30 % extrait sec) | : 62 g |
| - | $NH_4OH$ (d=0,9) | : 2 g |
| - | eau déminéralisée | : 122 g |
| | TOTAL | : 1000 g |

Le taux d'amine dans le primaire est compris entre 1 et 2 %. Le taux de solvant aprotique polaire dans la composition est compris entre 16 et 18 %. Le taux de solvant organique est inférieur à 5 %. Le taux d'eau dans la formulation du primaire est compris entre 50 % et 55 %.
Le taux de résine PAI dans la composition totale est de 4,13 %.
Le taux de solvant aprotique polaire (NEP) dans la composition totale est de 0,54 %.
Le rapport massique entre la quantité de polyamide-acide amique dans la composition de primaire PC3 et la quantité de solvant aprotique polaire (NEP) dans la composition de primaire PC3 (ratio PAI/SAP) est de 7,65 %.
Pour réaliser la composition de primaire PC3, on introduit dans le semi-fini aqueux SFC4 tous les autres composés susmentionnés.
Les propriétés de la composition de primaire PC3 ainsi obtenue sont les suivantes :

- extrait sec mesuré du primaire : 26,5 %,
- viscosité (en coupe 2,5 selon la norme DIN EN ISO 2433/ASTM D5125): 50 sec,
- la teneur en composés organiques volatiles est de 16,9 %.

## EXEMPLE 9

**Préparation d'une composition de primaire P4 en phase aqueuse à partir du semi-fini SF5 de l'exemple 5**

On réalise une composition de primaire P4 d'accrochage comportant les composés suivants, leurs quantités respectives étant indiquées en g pour 100 g de composition :

| | | |
|---|---|---|
| - | dispersion de PTFE (60 % extrait sec) | : 34,36 g |
| - | dispersion Noir de carbone (25 % extrait sec) | : 3,95 g |
| - | semi-fini SF5 (6,3 % extrait sec) | : 41,89 g |
| - | système tensioactif non-ionique à base d'alkylphénol éthoxylé (13 %) | : 5,81 g |
| - | silice colloïdale (30 % extrait sec) | : 12,37 g |
| - | eau déminéralisée | : 1,62 g |
| | TOTAL | : 100 g |

Le taux d'amine dans le primaire est inférieur à 2 %. Le taux de solvant aprotique polaire dans la composition de primaire est inférieur à 0,3 %. Le taux de solvant organique est inférieur à 5 %. Le taux d'eau dans la formulation du primaire est compris entre 65 % et 68 %.
Le taux de résine PAI dans la composition totale est de 2,48 %.
Le taux de solvant aprotique polaire (NMP) dans la composition totale est de 0,35 %.
Le rapport massique entre la quantité de polyamide-acide amique dans la composition de primaire P4 et la quantité de solvant aprotique polaire (NMP) dans la composition de primaire P4 (ratio PAI/SAP) est de 7,08.
Pour réaliser la composition de primaire P4, on introduit dans le semi-fini aqueux SF5 tous les autres composés susmentionnés.

Les propriétés de la composition de primaire P4 ainsi obtenu sont les suivantes :

- extrait sec mesuré du primaire : 29,1 %,
- viscosité (en coupe 2,5 selon la norme DIN EN ISO 2433/ASTM D5125): 49 sec,
- la teneur en composés organiques volatiles est de 2,58 %.

**EXEMPLE 10** (comparatif)

**Préparation d'une composition de primaire P5 en phase aqueuse à partir du semi-fini SF1 de l'exemple 1**

On réalise une composition de primaire P5 d'accrochage comportant les composés suivants, leurs quantités respectives étant indiquées en g :

| | | |
|---|---|---|
| - | dispersion de PTFE (60 % extrait sec) | : 34,36 g |
| - | dispersion Noir de carbone (25 % extrait sec) | : 3,95 g |
| - | semi-fini SF1 (6,9 % extrait sec) | : 41,89 g |
| - | système tensioactif non-ionique à base d'alkylphénol éthoxylé (13 %) | : 5,81 g |
| - | silice colloïdale (30 % extrait sec) | : 12,37 g |
| - | NMP | : 1,52 g |
| - | eau déminéralisée | : 1,62 g |
| | TOTAL | : 101,52 g |

Le taux d'amine dans le primaire est inférieur à 2 %. Le taux de solvant organique est inférieur à 5 %. Le taux d'eau dans la formulation du primaire est compris entre 64 % et 68 %.

Le taux de résine PAI dans la composition totale est de 2,89 %.

Le taux de solvant aprotique polaire (NMP) dans la composition totale est de 1,9 %.

Le rapport massique entre la quantité de polyamide-acide amique dans la composition de primaire P5 et la quantité de solvant aprotique polaire (NMP) dans la composition de primaire P5 (ratio PAI/SAP) est de 1,52.

Pour réaliser la composition de primaire P5, on introduit dans le semi-fini aqueux SF1 tous les autres composés susmentionnés.

Les propriétés de la composition de primaire P5 ainsi obtenue sont les suivantes :

- extrait sec mesuré du primaire : 28,5 %,
- viscosité (en coupe 2,5 selon la norme DIN EN ISO 2433/ASTM D5125): 55 sec,
- la teneur en composés organiques volatiles est de 4,07 %,
- la présence d'une faible quantité de solvant aprotique polaire, qui est inférieure à la limite d'étiquetage, favorise le séchage du primaire en conditions industrielles.

**EXEMPLE 11** (comparatif)

**Préparation d'une composition de primaire P6 en phase aqueuse à partir du semi-fini SF1 de l'exemple 1**

On réalise une composition de primaire P6 d'accrochage comportant les composés suivants, leurs quantités respectives étant indiquées en g :

| | | |
|---|---|---|
| - | dispersion de PTFE (60 % extrait sec) | : 34,36 g |
| - | dispersion Noir de carbone (25 % extrait sec) | : 3,95 g |
| - | semi-fini SF1 (6,9 % extrait sec) | : 41,89 g |
| - | système tensioactif non-ionique à base d'alkylphénol éthoxylé (13 %) | : 5,81 g |
| - | silice colloïdale (30 % extrait sec) | : 12,37 g |
| - | NMP | : 1,01 g |
| - | eau déminéralisée | : 1,62 g |
| | TOTAL | : 101,01 g |

Le taux d'amine dans le primaire est inférieur à 2 %. Le taux de solvant organique est inférieur à 5 %. Le taux

d'eau dans la formulation du primaire est compris entre 64 % et 68 %.

Le taux de résine PAI dans la composition totale est de 2,90 %.

Le taux de solvant aprotique polaire (NMP) dans la composition totale est de 1,41 %.

Le rapport massique entre la quantité de polyamide-acide amique dans la composition de primaire P6 et la quantité de solvant aprotique polaire (NMP) dans la composition de primaire P6 (ratio PAI/SAP) est de 2,06.

Pour réaliser la composition de primaire P6, on introduit dans le semi-fini aqueux SF1 tous les autres composés susmentionnés.

Les propriétés de la composition de primaire P6 ainsi obtenue sont les suivantes :

- extrait sec mesuré du primaire : 28,7 %,
- viscosité (en coupe 2,5 selon la norme DIN EN ISO 2433/ASTM D5125): 54 sec,
- la teneur en composés organiques volatiles est de 3,58 %,
- la présence d'une faible quantité de solvant aprotique polaire, qui est inférieure à la limite d'étiquetage, favorise le séchage du primaire en conditions industrielles.

## EXEMPLE 12

**Préparation d'une composition de primaire P7 en phase aqueuse à partir du semi-fini SF1 de l'exemple 1**

On réalise une composition de primaire P7 d'accrochage comportant les composés suivants, leurs quantités respectives étant indiquées en g :

| | |
|---|---|
| - dispersion de PTFE (60 % extrait sec) | : 34,36 g |
| - dispersion Noir de carbone (25 % extrait sec) | : 3,95 g |
| - semi-fini SF1 (6,9 % extrait sec) | : 41,89 g |
| - système tensioactif non-ionique à base d'alkylphénol éthoxylé (13 %) | : 5,81 g |
| - silice colloïdale (30 % extrait sec) | : 12,37 g |
| - NMP | : 0,55 g |
| - eau déminéralisée | : 1,62 g |
| TOTAL | : 100,55 g |

Le taux d'amine dans le primaire est inférieur à 2 %. Le taux de solvant organique est inférieur à 5 %. Le taux d'eau dans la formulation du primaire est compris entre 64 % et 68 %.

Le taux de résine PAI dans la composition totale est de 2,92 %.

Le taux de solvant aprotique polaire (NMP) dans la composition totale est de 0,96 %.

Le rapport massique entre la quantité de polyamide-acide amique dans la composition de primaire P7 et la quantité de solvant aprotique polaire (NMP) dans la composition de primaire P7 (ratio PAI/SAP) est de 3,04.

Pour réaliser la composition de primaire P7, on introduit dans le semi-fini aqueux SF1 tous les autres composés susmentionnés.

Les propriétés de la composition de primaire P7 ainsi obtenue sont les suivantes :

- extrait sec mesuré du primaire : 28,8 %,
- viscosité (en coupe 2,5 selon la norme DIN EN ISO 2433/ASTM D5125): 55 sec,
- la teneur en composés organiques volatiles est de 1,86 %.

## EXEMPLE 13

**Préparation d'une composition de primaire P8 en phase aqueuse à partir du semi-fini SF1 de l'exemple 1**

On réalise une composition de primaire P8 d'accrochage comportant les composés suivants, leurs quantités respectives étant indiquées en g :

| | |
|---|---|
| - dispersion de PTFE (60 % extrait sec) | : 34,36 g |
| - dispersion Noir de carbone (25 % extrait sec) | : 4,5 g |
| - semi-fini SF1 (6,9 % extrait sec) | : 95,00 g |
| - système tensioactif non-ionique à base d'alkylphénol éthoxylé (13 %) | : 5,81 g |

(suite)

| | | |
|---|---|---|
| - | silice colloïdale (30 % extrait sec) | : 14,00 g |
| - | NMP | : 0,55 g |
| | TOTAL | : 154,22 g |

Le taux d'amine dans le primaire est inférieur à 3 %. Le taux de solvant organique est inférieur à 5 %. Le taux d'eau dans la formulation du primaire est compris entre 68 % et 75 %.
Le taux de résine PAI dans la composition totale est de 4,27 %.
Le taux de solvant aprotique polaire (NMP) dans la composition totale est de 0,96 %.
Le rapport massique entre la quantité de polyamide-acide amique dans la composition de primaire P8 et la quantité de solvant aprotique polaire (NMP) dans la composition de primaire P8 (ratio PAI/SAP) est de 4,45.
Pour réaliser la composition de primaire P8, on introduit dans le semi-fini aqueux SF1 tous les autres composés susmentionnés.
Les propriétés de la composition de primaire P8 ainsi obtenue sont les suivantes :

- extrait sec mesuré du primaire : 21,6 %,
- viscosité (en coupe 2,5 selon la norme DIN EN ISO 2433/ASTM D5125): 60 sec,
- la teneur en composés organiques volatiles est de 3,56 %.

## EXEMPLE 14

**Réalisation d'articles antiadhésifs et tests**

On enduit de manière classique l'une des faces des substrats en aluminium par l'une des compositions de primaire P1, P2, PC3, P4, et P5 à P8 pour former une couche de primaire (les compositions PC3, P5 et P6 étant des exemples comparatifs).
Puis, on enduit sur les couches de primaire, la composition de finition F et l'ensemble subit une cuisson à une température de l'ordre de 420°C pendant une durée comprise entre 5 et 20 minutes.
On obtient des substrats revêtus d'une couche de primaire antiadhésif, qui sont ensuite soumis à l'ensemble de tests précédemment indiqués dans la présente demande.
Les valeurs obtenues à l'issue de ces différents tests sont rassemblées dans les tableaux 1 et 2 de résultats ci-après.
Les résultats présentés dans les tableaux 1 et 2 ci-après montrent que les primaires P1, P2 et P4 selon l'invention présentent un très haut niveau de sécurité car leur teneur en solvant aprotique polaire est très faible ce qui permet de les manipuler sans précautions particulières.
Les primaires P5 et P6 présentent un bon niveau de sécurité car ils restent exempts d'étiquetage particulier et peuvent être utilisés lorsque les conditions industrielles nécessitent des séchages rapides.
C'est aussi le cas du primaire P2, mais cela se fait au détriment d'une teneur en composés organiques certes fortement réduite par rapport à PC3, mais un peu plus élevée que pour les primaires P1, P4 et P5 à P8.
Les primaires P7 et P8 ont un comportement intermédiaire.
Tous les primaires présentent également des performances d'adhérence et de tenue à la corrosion similaires ou améliorées par rapport aux formulations comparatives riches en solvant aprotique polaire.
De plus, les primaires P1 et P2 présentent une excellente stabilité de la viscosité dans le temps, ce qui en facilite la manipulation et le stockage.
En outre, ces résultats montrent que l'on a intérêt à avoir des viscosités les plus stables possibles dans le temps car cela facilite les opérations de logistique en permettant des temps de conservation élevés.

Tableau 1

| Propriétés Résultats des tests | Exemple 6 PRIMAIRE P1 | Exemple 7 PRIMAIRE P2 | Exemple comparatif 8 PRIMAIRE PC3 | Exemple 9 PRIMAIRE P4 |
|---|---|---|---|---|
| **Type de semi-fini** | SF1 | SF2 | SFC4 | SF5 |
| Type d'amine | 2-butylaminoéthanol | isopropylamino éthanol (IPAE) | triéthylamine | triéthylamine |

(suite)

| Propriétés Résultats des tests | Exemple 6 PRIMAIRE P1 | Exemple 7 PRIMAIRE P2 | Exemple comparatif 8 PRIMAIRE PC3 | Exemple 9 PRIMAIRE P4 |
|---|---|---|---|---|
| Taux d'amine | <2% | <2% | <2% | <2% |
| Taux de solvant aprotique polaire | < 0,3 % | < 0,3 % | 15 % - 18 % | < 0,3 % |
| Ratio PAI/SAP | 7,00 | 7,00 | 0,27 | 7,00 |
| Taux de solvant organique | < 5 % | 8 % -10 % | < 5 % | < 5 % |
| Stabilité de la viscosité du primaire à 40°C | > 60 jours | > 60 jours | < 10 jours | > 30 jours < 60 jours |
| Test d'adhérence sur substrat Alu lisse | OK | OK | OK | OK |
| Tenue à la corrosion sur substrat Alu lisse | OK 100 % conforme | OK 100 % conforme | Mauvais 100 % de points de corrosion | 75 % de points de corrosion |
| Résistance à l'abrasion sur substrat Alu sablé | Apparition de la rayure au métal : 11000 frottements Perte totale d'anti-adhérence : 20000 frottements | Apparition de la rayure au métal : 10000 frottements Perte totale d'anti-adhérence : 20000 frottements | Apparition de la rayure au métal : 7000 frottements Perte totale d'anti-adhérence : 16000 frottements | Apparition de la rayure au métal : 8000 frottements Perte totale d'anti-adhérence : 17000 frottements |

Tableau 2

| Propriétés Résultats des tests | Exemple 10 PRIMAIRE P5 | Exemple 11 PRIMAIRE P6 | Exemple 12 PRIMAIRE P7 | Exemple 13 PRIMAIRE P8 |
|---|---|---|---|---|
| **Type de semi-fini** | SF1 | SF1 | SF1 | SF1 |
| Type d'amine | 2-butylaminoéthanol | 2-butylaminoéthanol | 2-butylaminoéthanol | 2-butylaminoéthanol |
| Taux d'amine | <2% | <2% | <2% | < 3 % |
| Taux de solvant aprotique polaire | 1,9 % | 1,41 % | 0,96 % | 0,96 % |

(suite)

| Propriétés Résultats des tests | Exemple 10 PRIMAIRE P5 | Exemple 11 PRIMAIRE P6 | Exemple 12 PRIMAIRE P7 | Exemple 13 PRIMAIRE P8 |
|---|---|---|---|---|
| Ratio PAI/SAP | 1,52 | 2,06 | 3,04 | 4,45 |
| Taux de solvant organique | < 5 % | < 5 % | < 5 % | < 5 % |
| Stabilité de la viscosité du primaire à 40°C | > 60 jours | > 60 jours | > 60 jours | > 60 jours |
| Test d'adhérence sur substrat Alu lisse | OK | OK | OK | OK |
| Tenue à la corrosion sur substrat Alu lisse | OK 100 % conforme | OK 100 % conforme | OK 100 % conforme | OK 100 % conforme |
| Résistance à l'abrasion sur substrat Alu sablé | Apparition de la rayure au métal : 11000 frottements Perte totale d'anti-adhérence : 20000 frottements | Apparition de la rayure au métal : 12000 frottements Perte totale d'anti-adhérence : 20000 frottements | Apparition de la rayure au métal : 13000 frottements Perte totale d'anti-adhérence : 20000 frottements | Pas d'apparition de rayures Perte totale d'anti-adhérence : 20000 frottements |

**Revendications**

1. Composition de primaire de revêtement antiadhésif comprenant au moins une résine fluorocarbonée, un polyamide-acide amique ayant un indice d'acide compris entre 50 et 200 mg de KOH/g, une base de Lewis, de l'eau et moins de 1 % en poids d'un solvant aprotique polaire par rapport au poids total de ladite composition,
**caractérisée en ce que** le rapport massique entre la quantité de polyamide-acide amique dans ladite composition et la quantité de solvant aprotique polaire dans ladite composition est d'au moins 1,5.

2. Composition selon la revendication 1, comprenant en outre moins de 45 % en poids d'un solvant organique non aprotique polaire par rapport au poids total de la composition.

3. Composition selon l'une quelconque des revendications précédentes, dans laquelle la base de Lewis est choisie dans le groupe comprenant les amines aliphatiques secondaires hydroxylées ou non, les amines primaires hydroxylées, les imidazoles, les imidazolines et les amines secondaires hétérocycliques.

4. Composition selon l'une quelconque des revendications précédentes, dans laquelle le polyamide-acide amique comprend des unités amide-acide amique répondant à la formule structurelle [1] dans laquelle R représente un radical arylène divalent :

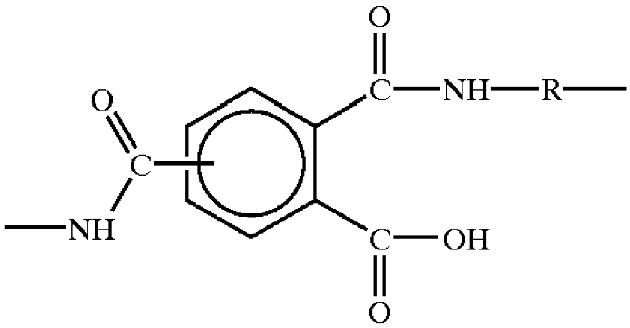

[1]

et des unités amide-imide répondant à la formule structurelle [2] :

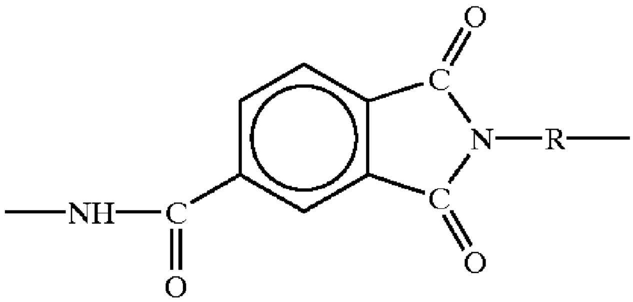

[2]

le rapport molaire desdites unités amide-acide amique sur lesdites unités amide-imide est compris entre 18 : 1 et 5 : 1.

5. Composition selon l'une quelconque des revendications précédentes, dans laquelle la résine fluorocarbonée est choisie dans le groupe comprenant les polytétrafluoroéthylènes (PTFE), les copolymères de tétrafluoroéthylène et de perfluoropropylvinyléther (PFA), les copolymères de tétrafluoroéthylène et d'hexafluoropropène (FEP), les polyfluorures de vinylidène (PVDF), le MVA (copolymère de TFE/PMVE), les terpolymères TFE/PMVE/FAVE, l'ETFE, et leurs mélanges.

6. Composition selon l'une quelconque des revendications précédentes, dans laquelle la résine fluorocarbonée représente 20 % à 98 % en poids du poids total sec de la composition de primaire.

7. Composition selon l'une quelconque des revendications précédentes, comprenant en outre au moins une charge.

8. Procédé de préparation d'une composition de primaire de revêtement antiadhésif comprenant les étapes suivantes :

- la préparation d'un mélange aqueux contenant :
    - un polyamide-acide amique ayant un indice d'acide compris entre 50 et 200 mg de KOH/g,
    - une base de Lewis, présente dans ledit mélange aqueux en une quantité représentant entre 95 % et 250 % de la quantité stœchiométrique nécessaire pour neutraliser les groupements acides dudit polyamide-acide amique,
    - de l'eau, et
    - moins de 1 % en poids de solvant aprotique polaire par rapport au poids total de ladite composition ;
- la mise en émulsion dudit mélange aqueux par chauffage à une température d'au moins 40°C et à pression atmosphérique ;
- puis le mélange de ladite émulsion avec une résine fluorocarbonée en poudre ou en dispersion aqueuse ;

le procédé étant **caractérisé en ce que** le polyamide-acide amique est présent en une quantité telle que le rapport massique entre la quantité de polyamide-acide amique dans ladite composition et la quantité de solvant aprotique polaire dans ladite composition est d'au moins 1,5.

**9.** Procédé selon la revendication 8, dans lequel la mise en émulsion est réalisée à une température comprise entre 50 et 85°C.

**10.** Procédé selon l'une quelconque des revendications 8 et 9, dans lequel la base de Lewis est choisie dans le groupe comprenant les amines aliphatiques secondaires hydroxylées ou non, les amines primaires hydroxylées, les imidazoles, les imidazolines et les amines secondaires hétérocycliques.

**11.** Procédé selon l'une quelconque des revendications 8 à 10, dans lequel la phase dispersante de ladite émulsion est l'eau et la phase dispersée se présente sous forme de gouttelettes dont le diamètre moyen est égal ou inférieur à 5 μm.

**12.** Procédé selon l'une quelconque des revendications 8 à 11, dans lequel ladite composition comprend en outre moins de 45 % en poids d'un solvant organique non aprotique polaire par rapport au poids total de la composition.

**13.** Procédé de fabrication d'un article comprenant les étapes suivantes:

- la fourniture d'un substrat métallique présentant deux faces opposées ;
- l'application sur l'une des faces dudit substrat d'au moins une couche de composition de primaire telle que définie selon l'une quelconque des revendications 1 à 7 ;
- l'application sur ladite couche de composition de primaire d'au moins une couche de composition de finition comprenant au moins une résine fluorocarbonée ; puis
- cuisson de l'ensemble à une température comprise entre 370°C et 430°C.

**14.** Article susceptible d'être obtenu selon le procédé tel que défini dans la revendication 13.

**15.** Article selon la revendication 14, constituant un article culinaire dont l'une des faces constitue une face interne destinée à être en contact avec des aliments placés à l'intérieur dudit article et l'autre face est une face externe convexe destinée à être en contact avec une source de chaleur.

## Patentansprüche

**1.** Grundierungszusammensetzung zur Antihaftbeschichtung, umfassend mindestens ein Fluorkohlenwasserstoffharz, eine Polyamid-Aminsäure mit einem Säureindex zwischen 50 und 200 mg KOH/g, eine Lewis-Base, Wasser und weniger als 1 Gew.-% eines polaren aprotischen Lösungsmittels bezogen auf das Gesamtgewicht der Zusammensetzung,
**dadurch gekennzeichnet, dass** das Massenverhältnis zwischen der Menge an Polyamid-Aminsäure in der Zusammensetzung und der Menge an polarem aprotischem Lösungsmittel in der Zusammensetzung mindestens 1,5 beträgt.

**2.** Zusammensetzung nach Anspruch 1, umfassend weniger als 45 Gew.-% eines polaren nicht-aprotischen organischen Lösungsmittels bezogen auf das Gesamtgewicht der Zusammensetzung.

**3.** Zusammensetzung nach einem der vorstehenden Ansprüche, wobei die Lewis-Base aus der Gruppe ausgewählt ist, die hydroxylierte oder nicht hydroxylierte aliphatische sekundäre Amine, hydroxylierte primäre Amine, Imidazole, Imidazoline und heterocyclische sekundäre Amine umfasst.

**4.** Zusammensetzung nach einem der vorstehenden Ansprüche, wobei die Polyamid-Aminsäure Amid-Aminsäure-Einheiten entsprechend der Strukturformel [1], in der R einen zweiwertigen Arylenrest darstellt:

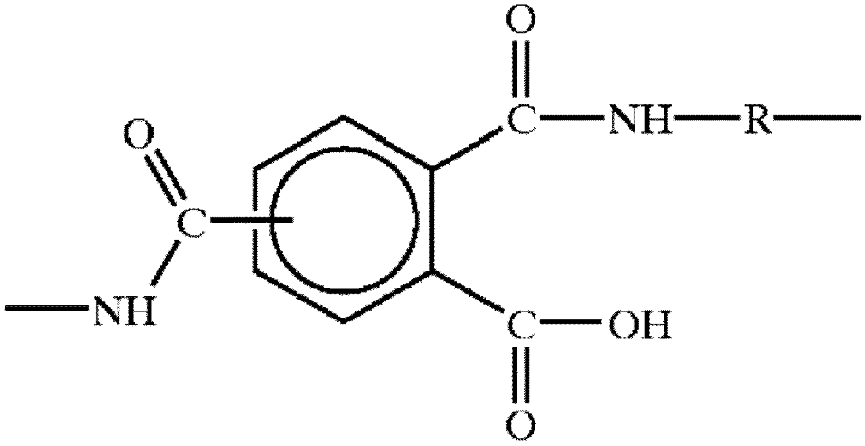

[1]

und Amid-Imid-Einheiten entsprechend der Strukturformel [2] umfasst:

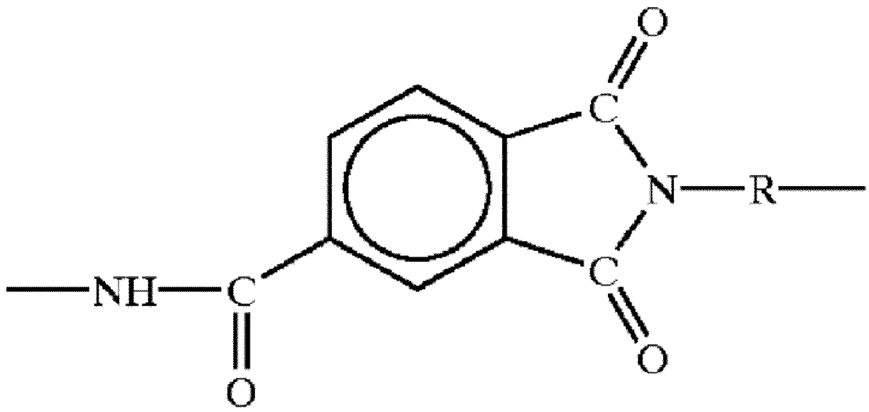

[2]

wobei das Molverhältnis der Amid-Aminsäure-Einheiten zu den Amid-Imid-Einheiten zwischen 18: 1 und 5: 1 liegt.

**5.** Zusammensetzung nach einem der vorherstehenden Ansprüche, wobei das Fluorkohlenwasserstoffharz ausgewählt ist aus der Gruppe, die Polytetrafluorethylene (PTFE), Copolymere von Tetrafluorethylen und Perfluorpropylvinylether (PFA), Copolymere von Tetrafluorethylen und Hexafluorpropen (FEP), Polyvinylidenfluoride (PVDF), MVA (Copolymer von TFE/PMVE), Terpolymere von TFE/PMVE/FAVE, ETFE und Gemische davon umfasst.

**6.** Zusammensetzung nach einem der vorstehenden Ansprüche, wobei das Fluorkohlenwasserstoffharz 20 bis 98 Gew.-% des Gesamttrockengewichts der Grundierungszusammensetzung ausmacht.

**7.** Zusammensetzung nach einem der vorstehenden Ansprüche, ferner umfassend mindestens einen Füllstoff.

**8.** Verfahren zur Zubereitung einer Grundierungszusammensetzung zur Antihaftbeschichtung, umfassend die folgenden Schritte:

- Zubereitung einer wässrigen Mischung, die enthält:
  - ◦ eine Polyamid-Aminsäure mit einem Säureindex zwischen 50 und 200 mg KOH/g,
  - ◦ eine Lewis-Base, die in der wässrigen Mischung in einer Menge vorhanden ist, die zwischen 95 % und 250 % der stöchiometrischen Menge darstellt, die erforderlich ist, um die Säuregruppen der Polyamid-Aminsäure zu neutralisieren,
  - ◦ Wasser und
  - ◦ weniger als 1 Gew.-% des polaren aprotischen Lösungsmittels in Bezug auf das Gesamtgewicht der Zusammensetzung;

- die Emulgierung des wässrigen Gemisches durch Erhitzen auf eine Temperatur von mindestens 40 °C und bei Atmosphärendruck;
- dann Mischen der Emulsion mit dem Fluorkohlenwasserstoffharz in Pulverform oder in wässriger Dispersion;

wobei das Verfahren **dadurch gekennzeichnet ist, dass** die Polyamid-Aminsäure in einer solchen Menge vorhanden ist, dass das Massenverhältnis zwischen der Menge an Polyamid-Aminsäure in der Zusammensetzung und der Menge an polarem aprotischem Lösungsmittel in der Zusammensetzung mindestens 1,5 beträgt.

**9.** Verfahren nach Anspruch 8, wobei die Emulgierung bei einer Temperatur zwischen 50 und 85 °C durchgeführt wird.

**10.** Verfahren nach einem der Ansprüche 8 und 9, wobei die Lewis-Base ausgewählt ist aus der Gruppe, die hydroxylierte oder nicht hydroxylierte sekundäre aliphatische Amine, hydroxylierte primäre Amine, Imidazole, Imidazoline und heterocyclische sekundäre Aminen umfasst.

**11.** Verfahren nach einem der Ansprüche 8 bis 10, wobei die dispergierte Phase der Emulsion Wasser ist und die dispergierte Phase in Form von Tröpfchen vorliegt, deren durchschnittlicher Durchmesser gleich oder kleiner als 5 μm ist.

**12.** Verfahren nach einem der Ansprüche 8 bis 11, wobei die Zusammensetzung ferner weniger als 45 Gew.-% eines polaren nicht-aprotischen organischen Lösungsmittels bezogen auf das Gesamtgewicht der Zusammensetzung umfasst.

**13.** Verfahren zur Herstellung eines Artikels, umfassend die folgenden Schritte:

- Vorsehen eines Metallsubstrats, das zwei gegenüberliegende Seiten vorweist;
- Aufbringen von mindestens einer Schicht der Grundierungszusammensetzung, wie gemäß einem der Ansprüche 1 bis 7 definiert, auf eine der Seiten des Substrats;
- Aufbringen von mindestens einer Deckzusammensetzungsschicht, die mindestens ein Fluorkohlenwasserstoffharz umfasst, auf die Schicht der Grundierungszusammensetzung; dann
- Backen der Anordnung bei einer Temperatur zwischen 370 °C und 430 °C.

**14.** Artikel, der nach dem in Anspruch 13 definierten Verfahren erhalten werden kann.

**15.** Artikel nach Anspruch 14, der einen kulinarischen Artikel darstellt, von dem eine der Seiten eine innere Seite darstellt, die dazu bestimmt ist, mit den in dem Artikel befindlichen Lebensmitteln in Kontakt zu kommen, und von dem die andere Seite eine konvexe äußere Seite ist, die dazu bestimmt ist, mit einer Wärmequelle in Kontakt zu sein.

## Claims

**1.** Primary non-stick coating composition including at least one fluorocarbon resin, a polyamide-amic acid having an acid index of between 50 and 200mg of KOH/g, a Lewis base, water and less than 1% by weight of a polar aproticsolvent with respect to the total weight of said composition,
**characterised in that** the mass ratio between the polyamide-amic acid quantity in said composition and the polar aprotic solvent quantity in said composition is at least 1.5.

**2.** Composition according to claim 1, further including less than 45% by weight of a polar non-aprotic organic solvent with respect to the total weight of the composition.

**3.** Composition according to any one of the preceding claims, wherein the Lewis base is selected from the group comprising hydroxylated (or not) secondary aliphatic amines, hydroxylated primary amines, imidazoles, imidazolines and heterocyclic secondary amines.

**4.** Composition according to any one of the preceding claims, wherein the polyamide-amic acid comprises amide-amic acid units responding to the structural formula [1] wherein R represents a divalent arylene radical:

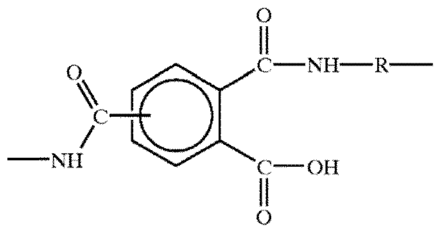

[1]

and amide-imide units responding to the structural formula [2]:

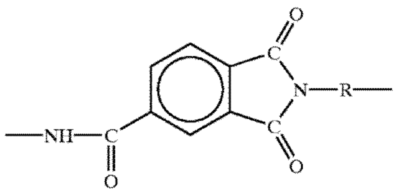

[2]

the molar ratio of said amide-amic acid units on said amide-imide units is of between 18:1 and 5:1.

5. Composition according to any one of the preceding claims, wherein the fluorocarbon resin is selected from the group comprising polytetrafluoroethylenes (PTFE), tetrafluoroethylene and perfluoropropylvinylether (PFA) copolymers, tetrafluoroethylene and hexafluoropropene (FEP) copolymers, vinylidene polyfluorides (PVDF), MVA (TFE/PMVE copolymer), TFE/PMVE/FAVE terpolymers, ETFE, and the mixtures thereof.

6. Composition according to any one of the preceding claims, wherein the fluorocarbon resin represents 20% to 98% by weight of the total dry weight of the primary composition.

7. Composition according to any one of the preceding claims, further including at least one filler.

8. Method for preparing a primary non-stick coating composition comprising the following steps:

   - preparing an aqueous mixture containing:

      - a polyamide-amic acid having an acid index of between 50 and 200mg of KOH/g,
      - a Lewis base, has in said aqueous mixture in a quantity representing between 95% and 250% of the stoichiometric quantity necessary to neutralise the acid groups of said polyamide-amic acid,
      - water, and
      - less than 1% by weight of polar aprotic solvent with respect to the total weight of said composition;

   - the emulsifying of said aqueous mixture by heating at a temperature of at least 40°C and at atmospheric pressure;
   - then, the mixture of said emulsion with a powdered or aqueously dispersed fluorocarbon resin;

   the method being **characterised in that** polyamide-amic acid is present in a quantity such that the mass ratio between the polyamide-amic acid quantity in said composition and the polar aprotic solvent quantity in said composition is at least 1.5.

9. Method according to claim 8, wherein the emulsifying is carried out at a temperature of between 50 and 85°C.

10. Method according to any one of claims 8 and 9, wherein the Lewis base is selected from the group comprising hydroxylated (or not) secondary aliphatic amines, hydroxylated primary amines, imidazoles, imidazolines and heterocyclic secondary amines.

**11.** Method according to any one of claims 8 to 10, wherein the dispersing phase of said emulsion is water and the dispersed phase is presented in the form of droplets of which the average diameter is equal to or less than 5μm.

**12.** Method according to any one of claims 8 to 11, wherein said composition further comprises less than 45% by weight of a polar non-aprotic organic solvent with respect to the total weight of the composition.

**13.** Method for producing an article comprising the following steps:

- supplying a metallic substrate having two opposite faces;
- applying on one of the faces of said substrate, at least one primary composition layer such as defined according to any one of claims 1 to 7;
- applying on said primary composition layer, at least one finishing composition layer comprising at least one fluorocarbon resin; then
- cooking the assembly at a temperature of between 370°C and 430°C.

**14.** Article likely to be obtained according to the method such as defined in claim 13.

**15.** Article according to claim 14, constituting a cooking article of which one of the faces constitutes an inner face intended to be in contact with food placed inside said article and the other face is a convex outer face intended to be in contact with a heat source.